# FASCICULE DE BREVET EUROPEEN

(11) **EP 2 144 943 B1**
(45) Date de publication et mention de la délivrance du brevet: **30.10.2019**
(21) Numéro de dépôt: 08805724.5
(22) Date de dépôt: 29.04.2008
(51) Int. Cl.: C08G 18/08, C08G 18/70, C08G 18/75, C08G 18/79, C09D 175/04

(54) **MÉLANGE À BASE DE POLYISOCYANATE ET D'UN SOLVANT DE TYPE ÉTHER ESTER, ÉMULSION AQUEUSE OBTENUE À PARTIR DE CE MÉLANGE ET UTILISATION DE CETTE ÉMULSION POUR LA FABRICATION DE REVÊTEMENTS ET D'ADHÉSIFS**
GEMISCH AUF BASIS EINES POLYISOCYANATS UND EINES ETHER-/ESTER-LÖSUNGSMITTELS, WÄSSRIGE EMULSION AUS DIESEM GEMISCH UND VERWENDUNG DIESER EMULSION ZUR HERSTELLUNG VON BESCHICHTUNGEN UND HAFTMITTELN
MIXTURE BASED ON A POLYISOCYANATE AND A SOLVENT OF ETHER ESTER TYPE, AQUEOUS EMULSION OBTAINED FROM THIS MIXTURE AND USE OF THIS EMULSION FOR THE MANUFACTURE OF COATINGS AND ADHESIVES

(30) Priorité: 03.05.2007 FR 0703190
(43) Date de publication de la demande: 20.01.2010
(73) Titulaire: Vencorex France, 69800 Saint-Priest (FR)
(72) Inventeur: BARBEAU, Philippe, F-69740 Genas (FR); OLIER, Philippe, F-69007 Lyon (FR); SCHWARZ, Johannes, F-69009 Lyon (FR)
(74) Mandataire: Dennemeyer & Associates S.A.
(86) Numéro de dépôt international: PCT/FR2008/050770
(87) Numéro de publication internationale: WO 2008/145932

(56) Documents cités:
- WO-A-97/31960
- WO-A-2006/064035
- US-A- 5 556 935

## Description

La présente invention concerne un mélange à base de polyisocyanate et d'un solvant de type éther ester, une émulsion aqueuse obtenue à partir de ce mélange et l'utilisation de cette émulsion pour la fabrication de revêtements et d'adhésifs.

On sait que l'on utilise largement dans le domaine des peintures et des vernis des diisocyanates, notamment les alcoylènes diisocyanates et leurs dérivés de type biuret ou leurs trimères.

Jusqu'à une date récente, ces produits étaient généralement utilisés en solution dans des solvants organiques. Or l'utilisation de solvants organiques est de plus en plus souvent critiquée car ces solvants, ou du moins certains d'entre eux, sont réputés toxiques ou chronotoxiques. C'est la raison pour laquelle on essaye de développer de plus en plus des techniques qui ne mettent en œuvre que peu de solvant, voire qui soient sans solvant. C'est dans ce but qu'il a été mis au point des compositions à base de polyisocyanate à la fois facilement émulsionnables et facilement utilisables en émulsion dans l'eau. L'eau sert dans ce cas de véhicule aux composants de la formulation et permet de réduire la teneur en solvants organiques dans celle-ci. De plus, de telles compositions permettent le rinçage à l'eau du matériel utilisé pour leur application.

Un des problèmes liés à ce type de techniques est d'obtenir des émulsions qui présentent une bonne stabilité, c'est-à-dire en fait des émulsions dont la taille des particules en suspension dans la phase liquide soit la plus fine possible. Par ailleurs, il est bien entendu demandé que les revêtements obtenus en utilisant ces émulsions présentent au moins globalement des propriétés comparables à celles des revêtements obtenus à partir des compositions en solvant organique. Ce peut être le cas notamment en ce qui concerne l'aspect et plus particulièrement la brillance, la résistance à l'eau, ou encore la vitesse de séchage du revêtement.

L'objet de l'invention est donc la mise au point d'une composition de polyisocyanate(s) susceptible de répondre à ces problèmes.

Dans ce but, l'invention concerne un mélange à base de polyisocyanate(s), caractérisé en ce qu'il comprend :
- au moins un polyisocyanate cycloaliphatique ;
- au moins un solvant comprenant une fonction ester et une fonction éther ; et
- un additif hydrophile du type non réactif.

Selon un mode de réalisation particulier, le mélange susmentionné selon l'invention est caractérisé en ce qu'il ne comprend pas de composé comprenant une fonction thiol.

L'invention concerne aussi une émulsion aqueuse qui est caractérisée en ce qu'elle est obtenue par mise en émulsion dans l'eau du mélange tel que décrit ci-dessus, mélange comprenant au moins un polyisocyanate cycloaliphatique et au moins un solvant comprenant une fonction ester et une fonction éther, avec un additif hydrophile du type non réactif, cette émulsion comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction thiol ou un composé contenant des fonctions précurseurs susceptibles de libérer des fonctions hydroxyles.

Il a été découvert de manière tout à fait surprenante que, grâce au mélange selon la présente invention utilisé comme durcisseur de revêtements aqueux, il est possible d'obtenir des revêtements résistants aux attaques chimiques, de brillance élevée et, en outre, de réduire le temps de séchage desdits revêtements aqueux.

D'autres caractéristiques, détails et avantages de l'invention apparaîtront encore plus complètement à la lecture de la description qui va suivre, ainsi que des divers exemples concrets mais non limitatifs destinés à l'illustrer.

Comme indiqué plus haut, le mélange à base de polyisocyanate(s) de l'invention comprend deux éléments essentiels : un polyisocyanate cycloaliphatique et un solvant spécifique. Ces deux éléments vont être décrits plus précisément ci-dessous.

Dans la présente invention, par « polyisocyanate cycloaliphatique », on entend un polyisocyanate comprenant au moins un cycle aliphatique. Les composés particulièrement préférés sont les oligomères ou les oligocondensats des monomères cycloaliphatiques, c'est-à-dire dont le squelette comporte au moins un cycle aliphatique ; parmi ces produits, ceux qui sont tout particulièrement préférés sont ceux qui sont issus de l'homo- ou de l'hétéro-trimérisation d'un monomère cycloaliphatique.

Les monomères cycloaliphatiques sont avantageusement choisis parmi ceux de la liste suivante :
- cyclobutane-1,3-di-isocyanate,
- cyclohexane-1,3- et/ou 1,4-di-isocyanate,
- 1-isocyanato-3,3,5-triméthyl-5-isocyanatométhylcyclohexane (isophorone di-isocyanate, IPDI),
- perhydro 2,4' et/ou 4,4'-diphénylméthane di-isocyanate (H₁₂MDI), et en général les précurseurs aromatiques aminés ou les carbamates perhydrogénés,
- les bis-isocyanatométhylcyclohexane (notamment 1,3 et 1,4) (BIC), et
- les bis-isocyanatométhylnorbornane (NBDI).

Ces monomères sont de préférence tels qu'au moins l'une, avantageusement les deux fonctions isocyanates, soit distante(s) du cycle le plus proche d'au plus un carbone et de préférence est reliée directement à lui. En outre, ces monomères cycloaliphatiques présentent avantageusement au moins une, de préférence deux, fonctions isocyanates choisies parmi les fonctions isocyanates secondaire, tertiaire ou néopentylique

Les meilleurs résultats, notamment en terme de temps de séchage de revêtements aqueux ou d'adhésifs dont le durcisseur comprend un mélange selon la présente invention, sont obtenus quand la liberté conformationnelle du monomère cycloaliphatique est faible. Comme monomères susceptibles de donner de bons résultats, on peut citer à titre d'exemple, et même de paradigme, les monomères suivants :
- les composés correspondants à l'hydrogénation du ou des noyaux aromatiques porteurs des fonctions isocyanates de monomères d'isocyanates aromatiques et notamment du TDI (toluène diisocyanate) et des diisocyanato-biphényles, le composé connu sous le sigle H₁₂MDI (diisocyanate de 4,4'-dicyclohexylméthanediyle) et les divers BIC [Bis(isocyanato-méthylcyclohexane)] ;
   et surtout
- le norbornanediisocyanate (ou 2,5(6)-diisocyanato-méthylbicyclo [2,2,1]heptane) souvent appelé par son sigle NBDI ; et
- l'isophoronediisocyanate ou IPDI ou 1-isocyanato-3,3,5-triméthyl-5-diisocyanatométhylcyclohexane.

Avantageusement le polyisocyanate cycloaliphatique de l'invention est un polyisocyanate isocyanurate obtenu à partir de diisocyanates cycloaliphatiques, de préférence l'IPDT, le NBDT, l'H₁₂MDT ou le 1,3-BDT (1,3-BIC trimère). Le polyisocyanate isocyanurate est de préférence obtenu par (cyclo)trimérisation catalytique de diisocyanates cycloaliphatiques.

Selon un mode de réalisation particulier de l'invention, le polyisocyanate cycloaliphatique est le produit de l'homocondensation de l'isocyanate IPDI ou provient d'un mélange des produits d'homocondensation, d'addition, des isocyanates HDI et IPDI.

De préférence le polyisocyanate cycloaliphatique est le produit de l'homocondensation de l'isocyanate IPDI seul, qui est de préférence cyclotrimérisé en isocyanurate d'IPDI, noté IPDT dans la suite.

Un, deux ou plusieurs autres polyisocyanates peuvent faire partie du mélange selon la présente invention. Ce (ou ces) polyisocyanate(s) peu(ven)t être choisi(s) parmi tout polyisocyanate connu dans le domaine, et notamment parmi les produits d'homo- ou d'hétéro-condensation d'alcoylènedi-isocyanates, comprenant notamment des produits du type « biuret » et du type « (cyclo)trimères », voire « prépolymères » à fonction isocyanate, comportant éventuellement des fonctions urée, uréthane, allophanate, et/ou ester amide, et parmi les mélanges en contenant.

Il peut s'agir, par exemple, des polyisocyanates commercialisés par la Société Rhodia, sous la dénomination « Tolonate® ».

De manière générale, les polyisocyanates préférés sont les produits d'homo- ou d'hétéro-condensation des isocyanates monomères suivants :
- 1,6-hexaméthylène diisocyanate (HDI), en particulier sous forme isocyanurate (HDT) ;
- 1,12-dodécane diisocyanate ;
- cyclobutane 1,3-diisocyanate ;
- cyclohexane 1,3 et/ou 1,4-diisocyanate ;
- 1-isocyanato-3,3,5-triméthyl-5-diisocyanato-méthylcyclohexane (isophorone diisocyanate, ou IPDI) ;
- 2,4 et/ou 2,6-hexahydrotoluylène diisocyanate ;
- hexahydro 1,3- et/ou 1,4-phénylène diisocyanate,
- perhydro 2,4'- et/ou 4,4'-diphénylméthane diisocyanate ;
- 1,3- et/ou 1,4-phénylène diisocyanate ;
- 2,4- et/ou 2,6-toluylène diisocyanate ;
- diphénylméthane 2,4'- et/ou 4,4'-diisocyanate ;
- isocyanato (4)-méthyloctylène, diisocyanate (LTI ou NTI) ;
- triphénylméthane 4,4',4"-triisocyanate ;
- 1,3-bisisocyanatométhyl cyclohexane ;
- bis-isocyanatométhylnorbornane (NBDI) ;
- 2-méthyl-pentaméthylène diisocyanate.

Comme autres monomères, on peut également citer les monomères aromatiques, comme par exemple le 2,4-toluène diisocyanate (TDI), le 2,6,4,4'-diphénylméthane diisocyanate (MDI), le 1,5-naphtalène diisocyanate (NDI), le tolidine diisocyanate (TODI) et le para-phénylène diisocyanate (PPDI), ainsi que les monomères correspondant aux produits d'hydrogénation des monomères aromatiques précités.

Comme indiqué précédemment, l'autre élément essentiel du mélange à base de polyisocyanate de l'invention est le solvant. En effet, les polyisocyanates aliphatiques utilisés dans le mélange de la présente invention, et notamment lorsqu'ils comprennent des dérivés de type polyisocyanurate de diisocyanate cycloaliphatique, sont en règle générale des produits de haute viscosité à température ambiante, voire peuvent se présenter sous forme de solides vitreux et amorphes qu'il est nécessaire de « diluer », voire « dissoudre », en phase organique pour pouvoir les mettre en œuvre.

Cette dilution peut être obtenue au moyen de solvants qui doivent être judicieusement sélectionnés en fonction de leur caractère physicochimique, de leur pouvoir solvant, ainsi que par leur effet sur les propriétés dans les applications en phase aqueuse. En particulier, le solvant doit être suffisamment hydrophobe pour « solubiliser » (ou « diluer ») le polyisocyanate cycloaliphatique, mais doit également être compatible avec les émulsions aqueuses auxquelles est destiné le mélange de l'invention.

En outre, parmi les critères importants pour la sélection d'un solvant adapté pour des applications en phase aqueuse on peut citer les caractéristiques d'ininflammabilité et d'absence ou de faible odeur dudit solvant. En effet, les solvants conventionnellement utilisés dans les systèmes de revêtements et d'adhésifs en phase solvant présentent des caractéristiques d'inflammabilité non acceptables et d'odeur impropre en phase aqueuse.

Les travaux de recherche qui ont menés à la présente invention ont permis de déterminer que les solvants comprenant à la fois une fonction ester et une fonction éther peuvent répondre aux diverses contraintes exposées ci-dessus.

Avantageusement, le solvant utilisé dans le mélange de l'invention est choisi parmi les solvants suivants : le 1-méthoxy-2-propylacétate, le 3-méthoxy-n-butylacétate, le diéthylène glycol butyl éther acétate, l'acétate de butyléthylène glycol, l'éthoxyproprionate d'éthyle.

De préférence le solvant est le 3-méthoxy-n-butylacétate.

En outre, le(s) solvant(s) utilisé(s) dans le mélange de l'invention présente(nt) l'avantage de conférer audit mélange une viscosité convenable en fonction du type d'application recherchée. En particulier, il a été observé que les mélanges selon l'invention présentent des viscosité à 5°C inférieure à 10 000 mPa.s, et ceci même pour des mélanges comportant une quantité de solvant relativement faible, de l'ordre de 35% en poids par rapport à la masse totale du mélange.

Ainsi, le(s) solvant(s) utilisé(s) dans le mélange de la présente invention permet(tent) une mise en œuvre avec un polyisocyanate aisée, à faible température, et avec une faible quantité de solvant(s) employée, ceci par rapport aux solvants habituellement utilisés dans le domaine des peintures, comme par exemple les solvants de type acétate de butyle et autres.

Par ailleurs, les avantages du solvant de l'invention sont notamment sa faible odeur et sa non-inflammabilité. Le terme « non-inflammabilité » signifie que le point d'éclair du solvant est supérieur à 61°C, mesuré selon la norme DIN 517-55. Ainsi, par exemple le 3-méthoxy-n-butylacétate présente un point d'éclair de 62°C.

Bien entendu, l'invention couvre les cas où le mélange contient plusieurs solvants. Ces solvants peuvent être un mélange de solvants selon l'invention. Ce peut être aussi une combinaison d'un solvant ou d'un mélange de solvants selon l'invention avec un ou plusieurs autres solvants connus et utilisés pour ce type de mélanges, par exemple l'acétate de butyle, les esters d'acide carbonique, comme le carbonate de propylène, les lactones comme l'ε-caprolactone, la N-éthylpyrolidone. On choisit toutefois de préférence ces solvants parmi ceux qui sont non inflammables, non toxiques (pour l'homme et l'environnement) et faiblement odorant (pour des raisons de gêne et de désagrément pour les opérateurs lors de l'application).

On utilise de préférence un solvant de point d'ébullition compris entre 50°C et 350°C, plus particulièrement entre 100°C et 300°C. Les solvants dont le point d'ébullition est supérieur à 300°C, voire 350°C, conduisent en effet à des revêtements et à des adhésifs dont le temps de séchage sera très, voire trop, important pour les applications envisagées.

La proportion de solvant dans le mélange de l'invention est généralement comprise entre 2% et 60%, plus particulièrement entre 5% et 50% et encore plus particulièrement entre 7% et 40% en masse de solvant par rapport à l'ensemble du mélange.

On notera que dans le cas d'un mélange d'un ou de plusieurs solvants selon l'invention avec un ou des solvants connus mentionnés plus haut, la proportion en solvant selon l'invention est de préférence d'au moins 30% en masse par rapport à l'ensemble des solvants, la proportion globale en l'ensemble des solvants restant alors dans la gamme donnée au paragraphe précédent.

Le mélange de l'invention est avantageusement « émulsifiable dans l'eau ». Par mélange « émulsifiable dans l'eau », on entend un mélange qui, quand il est mis dans l'eau, est susceptible de donner une émulsion c'est-à-dire un milieu liquide constitué de particules (gouttelettes) de liquide dispersées dans une autre phase liquide.

De préférence, le mélange est du type auto-émulsionnable, c'est-à-dire qu'il s'agit d'un mélange capable de former, en présence d'un milieu liquide dans laquelle ledit mélange est immiscible, une émulsion par un mécanisme spontané. Dans le mécanisme d'émulsification spontanée, l'énergie nécessaire pour former une émulsion concerne uniquement l'énergie requise pour redistribuer la matière à émulsionner dans le mélange : ainsi il n'y a pas besoin d'énergie extérieure, essentiellement d'énergie d'agitation, pour créer l'émulsion. En d'autres termes, une simple agitation manuelle suffit à assurer une répartition macroscopiquement uniforme de la phase discontinue et à obtenir ainsi l'émulsion.

Pour que le mélange de l'invention soit émulsifiable au sens donné plus haut, il comporte généralement en outre un additif permettant de le mettre en émulsion dans l'eau, ou de le rendre hydrodispersable ou hydrosoluble. Cet additif est un additif hydrophile, du type tensioactif et il comporte dans sa structure au moins une fonction hydrophile. On utilisera dans la suite de la description le terme « additif hydrophile ».

Le mélange de l'invention contient un additif hydrophile du type non réactif, c'est-à-dire que cet additif est présent en mélange avec le mélange de l'invention sans qu'il y ait eu une réaction entre cet additif et le polyisocyanate du mélange.

L'additif peut toutefois réagir de manière non désirée avec les autres composants présents dans le mélange. L'additif hydrophile est cependant considéré comme étant sous forme essentiellement libre dans le mélange de l'invention. Dans ce contexte, l'expression "forme essentiellement libre" signifie que moins de 30%, avantageusement moins de 20%, de préférence moins de 10%, de préférence encore moins de 5%, voire moins de 2% en masse de l'additif hydrophile, est sous forme liée, bien qu'il a été incorporé sous forme de mélange, sans volonté de le faire réagir avec le ou les autre(s) composant(s) du mélange.

Comme additif hydrophile non-réactif, on peut mentionner ceux décrits dans les documents WO 97/31960 et FR 2855768-A1, à l'enseignement desquels on pourra se reporter. Ces additifs présentent une fonction anionique et avantageusement un fragment de chaîne polyéthylène glycol d'au moins une, de préférence d'au moins 5 unités éthylènyloxyles.

On peut mentionner plus particulièrement parmi ces additifs ceux de formule (1) ci-dessous : 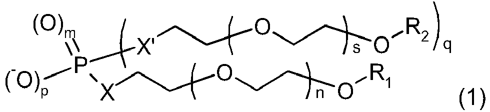 avec, lorsque q est égal à zéro, ceux de formule (2) : 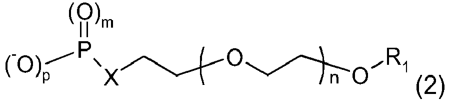 additifs de formule (1) ou de formule (2) où :
- p représente zéro ou un entier entre 1 et 2 (intervalles fermés c'est à dire comprenant les bornes) ;
- m représente zéro ou un entier entre 1 et 2 (intervalles fermés c'est à dire comprenant les bornes) ;
- la somme p + m + q est au plus égale à trois ;
- la somme 1+ p + 2m + q est égale à trois ou à cinq ;
- X et X', semblables ou différents, représentent un bras comportant au plus deux chaînons carbonés ;
- n et s, semblables ou différents, représentent un entier choisi entre 5 et 30 avantageusement entre 5 et 25, de préférence entre 9 et 20 (intervalles fermés c'est à dire comprenant les bornes) ; et
- R₁ et R₂, identiques ou différents, représentent un radical hydrocarboné, avantageusement choisi parmi les aryles et les alcoyles, éventuellement substitués, notamment par atome d'halogène, notamment fluor.

Le contre-cation est avantageusement monovalent et est choisi parmi les cations minéraux et les cations organiques avantageusement non nucléophiles de nature quaternaire ou tertiaire, notamment les "oniums" de la colonne V tels que phosphonium, ammonium, ou de la colonne VI tels que sulfonium, et leurs mélanges. On préfère les contre-cations de type ammonium, issus d'une amine, avantageusement tertiaire. On préfère en outre éviter que le cation organique présente un hydrogène réactif avec la fonction isocyanate. La classification périodique des éléments utilisée dans la présente demande est celle du supplément au Bulletin de la Société Chimique de France, janvier 1966, n° 1.

Ainsi, des additifs hydrophiles non-réactifs particulièrement préférés sont les additifs connus sous la dénomination « Rhodafac® » de la Société Rhodia qui sont généralement utilisés sous leur forme neutralisée, ladite neutralisation pouvant être effectuée avant ou pendant, de préférence avant, l'addition de l'additif au mélange. La neutralisation peut notamment être effectuée par des amines, comme indiqué ci-dessus, notamment par la diméthylcyclohexylamine ou DMCHA.

Le rapport massique entre le(s) polyisocyanate(s) du mélange et l'additif hydrophile est le plus souvent au plus égal à environ 33%, avantageusement au plus égal à environ 20%, de préférence à environ 12%. Ce rapport massique est avantageusement supérieur à 1%, de préférence à 2%.

L'additif hydrophile peut être introduit dans un mélange comprenant le(s) polyisocyanate(s) cycloaliphatique(s) et le solvant de l'invention. L'ajout de l'additif hydrophile peut se faire par simple mélange de l'additif au(x) polyisocyanate(s) cycloaliphatique(s) en solution dans le solvant. Le mélange ne doit pas être effectué à des températures trop élevées et est généralement effectué à une température variant de 10°C à moins de 100°C, de préférence à une température comprise entre 10°C et 90°C, de p référence encore entre 10°C et 80°C, par exemple aux environs de 50°C.

À ce titre, il est souhaitable d'incorporer l'additif hydrophile non réactif dans un mélange qui soit le moins visqueux possible, ce qui est rendu possible grâce au solvant décrit plus haut.

On préfère tout particulièrement les mélanges de l'invention qui comprennent :
- un solvant à fonction éther et ester de type carboxylate d'alkoxy-alkyle, de préférence le 3-méthoxy-n-butylacétate ;
- un poly-isocyanate cycloaliphatique, de préférence l'isocyanurate d'isophorone di-isocyanate (IPDT) ; et
- un additif hydrophile non réactif, de préférence un additif de formule (1) et/ou de formule (2) définis précédemment,
dans les proportions de 20% à 50% en poids de solvant par rapport à la masse totale de mélange, de préférence de 25% à 45%, par exemple 35% en poids de solvant par rapport à la masse totale de mélange, et avec un rapport massique entre l'additif hydrophile et le(s) polyisocyanate(s) du mélange au plus égal à environ 33%, avantageusement au plus égal à environ 20%, de préférence à environ 10%, et avantageusement supérieur à 1%, de préférence à 2%.

Parmi les mélanges qui viennent d'être définis, on préfère également lesdits mélanges comprenant en outre un ou plusieurs autres polyisocyanates, et notamment ceux qui comprennent un isocyanurate d'un poly-isocyanate aliphatique, notamment l'isocyanurate d'hexaméthylène di-isocyanate (HDT).

Le mélange de la présente invention peut en outre contenir un ou plusieurs additifs organiques ou inorganiques, tels que ceux communément utilisés dans le domaine, et par exemple choisis parmi les stabilisants, les anti-oxydants, les pigments, les additifs de rhéologie, les épaississants, les agents de surface, les catalyseurs, en fonction des propriétés recherchées.

Le mélange selon la présente invention se présente ainsi généralement, et le plus souvent, sous la forme d'un liquide homogène et faiblement visqueux, notamment de viscosité inférieure à 10 000 mPa.s à une température de 5°C, et en particulier inférieure à 2 000 mPa.s à 25°C (pour une teneur en solvant de 35% en poids.

Le mélange de l'invention peut être mis en œuvre avec une ou plusieurs dispersions aqueuses de polyuréthane. Des dispersions aqueuses convenables dans le cadre de l'invention sont connues en soi et sont décrites, par exemple, dans les documents US 3479310, GB 1076688, US 4108814, US 4092286, DE 2651505, US 4190566, DE 2732131, DE 2811148, ou dans les documents US 2006/240264, US 2005/288431, US 2005/209425, US 7012115 ou EP 986592.

Comme on l'a vu plus haut, l'invention concerne aussi une émulsion aqueuse obtenue à partir du mélange comprenant un polyisocyanate cycloaliphatique, le solvant et l'additif hydrophile du type non-réactif, tels qu'ils ont été décrits précédemment.

La phase aqueuse de l'émulsion sert de vecteur du ou des co-réactifs polycondensables avec le ou les polyisocyanate(s) du mélange, c'est-à-dire le ou les composé(s) à hydrogène mobile mentionné(s) précédemment.

Les composés à hydrogène mobile utilisables sont bien connus. De préférence, ces composés sont choisis parmi les polyols qui peuvent être utilisés seuls ou en mélange ou encore les composés contenant des fonctions précurseurs susceptibles de libérer des fonctions hydroxyles. Ce peuvent être avantageusement des polymères acryliques, polyesters, polyuréthannes ou des hybrides de ces polymères. On peut mentionner aussi les polyéthers.

Comme fonctions précurseurs susceptibles de libérer des fonctions hydroxyles, on peut citer par exemple les fonctions époxy, carbonates ou dioxolane. Ces fonctions précurseurs libèrent les fonctions hydroxy par réaction avec un nucléophile adéquat comme une amine ou de l'eau, éventuellement en présence d'un catalyseur qui peut être un composé acide ou un acide de Lewis dans une quantité en poids qui peut être comprise par exemple entre 50 ppm et 5000 ppm, plus particulièrement entre 100 ppm et 500 ppm, quantité exprimée en poids de catalyseur par rapport à l'extrait sec de la composition polyisocyanate et du composé porteur d'au moins une fonction à hydrogène mobile.

L'émulsion peut bien entendu comporter un ou plusieurs (c'est-à-dire un mélange) de composés à hydrogène mobile, avec le cas échéant et si on le souhaite pour les applications visées, une ou plusieurs dispersions aqueuses de polyuréthane décrites plus haut.

L'émulsion peut en outre contenir un ou plusieurs additifs organiques ou inorganiques, tels que ceux communément utilisés dans le domaine, et par exemple choisis parmi les stabilisants, les anti-oxydants, les pigments, les additifs de rhéologie, les épaississants, les agents de surface, les catalyseurs, en fonction des propriétés recherchées.

L'invention concerne aussi un procédé de fabrication d'un revêtement sur un substrat dans lequel on utilise l'émulsion décrite ci-dessus. Par revêtement on entend tout type de couche appliquée en totalité ou en partie sur un substrat de nature à protéger et/ou à décorer celui-ci, par exemple une peinture ou un vernis.

Le procédé est mis en œuvre en appliquant l'émulsion sur le substrat par toute technique connue. Le substrat est un matériau qui peut être choisi parmi le bois, les métaux, les ciments, les matériaux plastiques, les textiles, le cuir.

Dans le cas d'un substrat métallique, le métal peut être par exemple l'aluminium ou un acier.

On notera que le procédé s'applique à des substrats pouvant comporter plusieurs revêtements superposés et, dans ce cas, le produit de l'invention peut être utilisé pour la préparation de l'un quelconque de ces revêtements. Toutefois, le produit de l'invention peut être avantageusement utilisé pour un revêtement de finition, c'est le cas notamment des substrats en cuir.

Une fois l'émulsion déposée, la réaction entre le polyisocyanate du mélange et le composé porteur d'au moins une fonction à hydrogène mobile peut se faire à température ambiante ou à chaud à une température qui peut être comprise entre 30°C et 300°C, de préférence entre 40°C et 250°C et encore plus préférentiellement entre 50°C et 150°C, de préférence inférieure à 100°C. La température et le temps de réticulation sont adaptés en fonction du substrat. Dans le cas de substrats sensibles à la température on utilisera plus particulièrement des catalyseurs de réticulation.

Les revêtements obtenus, qui comprennent le mélange selon la présente invention, présentent un degré de brillance élevé, ainsi qu'un temps de séchage convenable, degré de brillance et temps de séchage qui sont au moins comparables à, voire meilleurs que, les revêtements connus dans le domaine. Les revêtements comprenant le mélange de la présente invention se sont montrés en particulier plus brillants que des revêtements similaires où le solvant utilisé est un solvant de type ester, en particulier de type carbonate.

L'émulsion de l'invention peut aussi être utilisée comme adhésif. Dans un tel cas, on forme un revêtement comme décrit plus haut, ce revêtement ayant ici des propriétés d'adhésif, sur un substrat destiné à être collé avec un autre élément. Le substrat peut être tout particulièrement un substrat en bois.

Des exemples vont maintenant être donnés à titre illustratif sans apporter aucune limitation à l'invention qui est définie par les revendications annexées à la présente description.

Le terme « viscosité » employé dans la présente description, les exemples qui suivent et les revendications annexées s'entend comme viscosité dynamique. La mesure de viscosité est basée sur le principe d'un cylindre tournant dans l'échantillon à étudier placé dans une cuve coaxiale. On mesure le couple nécessaire pour vaincre la résistance opposée par le produit à la rotation d'un cylindre.

L'appareillage utilisé est un appareil Rhéovisco 2 M de la société RHEO, équipé d'un bain thermostaté LAUDA et d'une sonde de température EIRELEC MT100 KC.

La viscosité (en centipoise (cP) ou en mPa.s) est directement lue sur l'écran d'affichage. La précision de la mesure est de +/- 1,5% de la valeur pleine échelle.

À titre d'exemple, la viscosité d'un produit à 200 cP est mesurée à l'aide de la géométrie DIN 24 à 60 tr/min. À cette vitesse, la viscosité pleine échelle est de 239,2 cP, soit une précision de 239,2 x 1,5% = 4 cP. La viscosité d'un produit à 4000 cP est mesurée à l'aide de la géométrie DIN 14 à 12 tr/min. À cette vitesse, la viscosité pleine échelle est de 6006,6 cP, soit une précision de 6006,6 x 1,5% = 90 cP

### EXEMPLES

### Exemple 1 : Dissolution d'isocyanurate d'IPDI (IPDT)

### a) Mode opératoire standard

Le mode opératoire standard suivant a été utilisé pour réaliser des dissolutions de l'IPDT solide (poudre) (CAS RN : 53880-05-0) dans les différents solvants suivant :
- Acétate de butyle (essai comparatif)
- Highsolv® P (Société Clariant) (essai comparatif)
- Méthoxy-n-butylacétate (selon l'invention) (CAS RN : 4435-53-4)

On charge la totalité du solvant et on chauffe à environ 50°C. Un tiers de la masse d'IPDT est ajouté rapidement. La consigne de température est relevée à 90 - 130°C, en fonction des solvants, par exemple 90°C pour le méthoxy-n-butylacétate.

Le reste de l'IPDT est ajouté ensuite et l'agitation est maintenue pendant 1 à 2 heures en fonction de solvants.

### b) Mode opératoire détaillé : mélange IPDT / méthoxy-n-butylacétate

On prépare 180 g d'un mélange IPDT / méthoxy-n-butylacétate à 65% d'extrait sec (i.e. 65% en poids IPDT; 35% en poids de méthoxy-n-butylacétate), à partir de 117 g d'IPDT solide (Société Hüls Corporation; de type Vestanate® T 1890/100 ; présentation sous forme de granules de diamètre inférieur à 0,8 cm) et de 63 g de solvant méthoxy-n-butylacétate (Société Celanese).

La totalité du solvant (63 g) est chargée dans un réacteur de 300 mL, préalablement nettoyé par le solvant réactionnel et séché par balayage d'azote.

Le réacteur est alors chauffé à 50°C et environ un tiers de la quantité totale (39 g) d'IPDT solide est ajouté, sous agitation mécanique.

Après 15 minutes d'agitation, le réacteur est chauffé à 90°C, température à laquelle on ajoute, pendant 30 minutes sous agitation, le reste de l'IPDT solide (78 g).

L'agitation est maintenue à la température de 90°C pendant 1 heure. Le mélange est alors filtré à chaud (taille de maille 30 µm), à une température d'environ 40°C.

### Exemple 2 : Test de viscosité

Avec l'acétate de butyle utilisé comme dissolvant de l'IPDT selon le mode opératoire ci-dessus, une viscosité inférieure à 1000 mPa.s peut être obtenue. Cependant, ce solvant possède un point d'éclair faible (22°C) et une odeur agressive gênante pour certaines applications.

L'utilisation de Highsolv® P à point d'éclair plus élevé (59°C) conduit à une augmentation importante de la viscosité (1890 mPa.s à 25°C).

En revanche, les solutions de l'IPDT dans le méthoxy-n-butylacétate (point d'éclair: 62°C) (Exemple 1.b) ci-dessus), quant à elles confèrent au mélange une faible viscosité (760 mPa.s à 25°C) et ce même à basse température, tout en maintenant l'odeur acceptable. Ainsi on mesure moins de 7 000 mPa.s à 5°C, température à laquelle une solution dans du Highsolv® P de même titre en IPDT ne s'écoule plus.

### Exemple 3 : Test de facilité de mise en solution et de manipulation

Un autre avantage apporté par les solvants de type éther-ester, comme par exemple le méthoxy-n-butylacétate, est la facilité de dissolution. Généralement, il est suffisant de chauffer le mélange solvant / IPDT solide à une température inférieure à 100°C, par exemple aux environs de 90°C, pendant environ 2 heures pour obtenir un mélange homogène et de viscosité stable. Il est même possible obtenir le mélange par agitation à température ambiante pendant une nuit.

Pour réaliser le même mélange avec le Highsolv® P il est nécessaire de chauffer au delà de 90°C, modifiant a insi à la fois la viscosité et la couleur de la solution.

D'autre part, lorsqu'elles sont exposées à des températures inférieures à 15°C, les solutions dans le Highsolv® P deviennent difficilement pompables (viscosité > 10000 mPa.s). Le mélange IPDT/ méthoxy-n-butylacétate (65% et35% en poids respectivement) atteint cette limite seulement vers 0°C.

### Exemple 4 : Préparation d'une composition auto-émulsionnable

Dans un réacteur de 300 mL, préalablement nettoyé par le solvant réactionnel et séché par balayage d'azote, on charge 143 g d'isocyanurate d'hexaméthylène di-isocyanate (HDT de titre NCO théorique 22,0 ± 0,5 ; Société Rhodia).

Sous agitation, on charge alors 94,2 g de mélange obtenu à l'exemple 1. b), puis 4,4 g de diméthylcyclohexylamine (DMCHA).

Ensuite sont ajoutés, à l'aide d'un « pousse seringue », pendant 30 à 45 minutes, en maintenant l'agitation, 13,8 g d'additif hydrophile non-réactif de type ester de phosphate éthoxylé (gamme Rhodafac®, fournisseur : Rhodia), caractérisé par une tête hydrophobe en C₁₃, une longueur moyenne de chaîne éthoxylée de 7 unités oxyde d'éthylène et une valeur moyenne d'acidité de 185 mg KOH/g.

Au cours de cette étape, la température du réacteur est maintenue en dessous de 50°C par refroidissement.

On ajoute alors 90 mg (soit environ 280 ppm) d'un stabilisant antioxydant (Irganox® 1135 ; fournisseur: Ciba) dilué avec du méthoxy-n-butylacétate (1:1).

L'ensemble est dilué avec le restant de méthoxy-n-butylacétate (charge totale : 64,5 g), puis homogénéisé pendant 1 heure. Le mélange auto-émulsionnable est ensuite filtré puis conservé sous azote.

Le mélange auto-émulsionnable possède les caractéristiques suivantes :
- Coloration (APHA) : < 100
- Titre NCO : 12,2 ± 1%
- Extrait sec : 68 ± 3%
- Viscosité (25°C) : 200 ± 100 mPa.s
- ∑ (HDI + IPDI) : < 0.5%
- HDI : < 0.5%
- IPDI : < 0.5%.

### Exemple 5 : Préparation d'une composition auto-émulsionnable

On prépare 80,2 g du mélange suivant comme décrit à l'exemple 4 :

| **Composé** | ***Poids (g)*** |
|---|---|
| Trimère d'HDI (HDT) | 44.0 g |
| Trimère d'IPDI (IPDT) à 65% dans méthoxy-n-butylacétate | 29.0 g |
| Ester de phosphate éthoxylé décrit à l'exemple 4 (Rhodafac®) | 5.9 g |
| Diméthylcyclohexylamine (DMCHA) | 1.3 g |

### Exemples 6 à 10 : Exemples d'application sur bois (tests sur verre)

Ce mélange est ensuite ajouté à divers solvants, dans les quantités indiquées (en grammes) dans le tableau suivant, afin d'obtenir les compositions décrites comme la partie B (compositions B1 à B4) des formulations des exemples 6 à 9 respectivement :

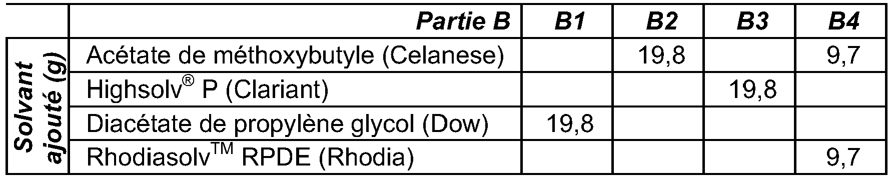

En outre, on utilise, en tant que partie B5 (à titre d'exemple comparatif), le Rhodocoat™ X EZ-D 401 (Société Rhodia), mélange auto-émulsionnable à base d'IPDT et d'additif hydrophile, dans l'acétate de butyle.

Les compositions B1 à B5 sont ensuite mélangées de façon manuelle à une partie A (référence Flow® gloss de BONA) commerciale destinée à l'application de revêtements sur parquet.

Le rapport utilisé est de 10 parties de A pour une partie de chacune des parties B (B1 à B5).

Les formulations A+B sont ensuite appliquées sur plaque de verre et les mesures suivantes sont effectuées :

### Durée d'incorporation

On mesure le temps nécessaire (exprimé en minutes) pour obtenir un mélange homogène de A+B.

### Temps de séchage

T1 est caractérisé par le temps de séchage « hors poussières ». Après application du feuil, T1 correspond au temps (exprimé en minutes) à partir duquel de petites billes de verre peuvent être enlevées par un léger brossage sans endommager la surface.

### Détermination de la reprise de dureté

Cette technique consiste à suivre l'évolution de la dureté Persoz d'un feuil de vernis ou de peinture au cours du séchage (après1 jour (J1), trois jours (J3) et sept jours (J7)) grâce à un pendule d'essai type 300 de chez Erichsen. Le principe du pendule de dureté Persoz se base sur le fait que les oscillations d'un pendule placé sur un échantillon sont d'autant plus amorties que la couche de vernis est plus molle. Il consiste à mesurer la dureté d'un film par l'amortissement des oscillations d'un pendule de 12°à 4°qui repose sur le film par deux billes d'acier de même diamètre. Les résultats s'expriment en secondes. L'évolution plus ou moins rapide de la dureté Persoz au cours du temps permet de suivre la construction du réseau.

### Brillance

La brillance d'un revêtement est une des propriétés les plus utilement mesurables. Le principe est de diriger, sous un angle de 20°, 60° ou 85°, un faisceau lumineux sur la surface à examiner. Les rayons réfléchis sont recueillis par une cellule photoélectrique. Grâce à un galvanomètre, l'appareil donne une valeur de 0 à 100 proportionnelle à la brillance. Un étalon en céramique sert de référence et représente la valeur maximale. On exprime la brillance en % (ou unité de brillance).

| | | ***Incorporation*** | ***Temps de séchage*** | ***Dureté Persoz*** | | | ***Brillance*** |
|---|---|---|---|---|---|---|---|
| ***Exemple N°*** | ***Partie B*** | ***Durée*** | ***T1 (min.)*** | ***J1*** | ***J3*** | ***J7*** | ***à 20*°** |
| Exemple 6 | B1 | 1 min. 20 sec. | 32 | 155 | 197 | 191 | 85.4 |
| Exemple 7 | B2 | 1 min. 20 sec. | 16 | 196 | 224 | 215 | 86.3 |
| Exemple 8 | B3 | 40 sec. | 25 | 191 | 221 | 202 | 87.5 |
| Exemple 9 | B4 | 2 min. | 23 | 173 | 209 | 210 | 86.3 |
| Exemple 10 (compara tif) | B5 | 2 min. 45 sec. | 21 | 192 | 222 | 195 | 79.3 |

Les formulations basées sur l'utilisation de l'IPDT préparé dans un solvant comportant une fonction ester et une fonction éther, tel que l'acétate de méthoxybutyle, présentent des temps de mélange plus court, en comparaison d'une composition d'IPDT dans l'acétate de butyle (exemple comparatif 10). De plus, la brillance obtenue est également supérieure, signe d'une meilleure compatibilité des parties A et B.

L'exemple 7 en particulier présente un bon compromis entre temps de séchage hors poussière, brillant et développement de dureté.

### Exemples 11 et 12 : Exemples d'application sur métal

On réalise une partie A selon la composition suivante :

| ***Composant*** | ***Quantité (g)*** | ***Fonction*** | ***Fabriquant*** |
|---|---|---|---|
| Setalux 6511AQ47 | 272,8 | Résine polyol | Nuplex |
| Setalux 6520AQ45 | 284,6 | Résine polyol | Nuplex |
| Butyl glycol | 10,8 | Agent de coalescence | |
| Dehydran 1293 | 1,8 | Antimousse | Cognis |
| Surfynol 104DPM | 11,5 | Antimousse | Air products |
| BYK301 | 1,2 | Agent d'étalement | BYK |
| BYK348 | 1,2 | Agent de mouillage | BYK |
| Tafigel PUR60 (25% dans BG) | 4,7 | Épaississant | Münzig chemie |
| H₂O | 13,7 | | |
| DBTL (1% dans Solvesso100) | 5,5 | Catalyseur | Fluka |
| H₂O | 76,2 | | |
| Quantité totale (g) : | 684,0 | | |

Les parties B utilisées sont les suivantes :

| ***Exemple N°*** | ***Composition*** | ***Quantité de partie B (g) pour 684 g de partie A*** |
|---|---|---|
| Exemple 11 | Partie B2 (exemple 7) | 272.08 |
| Exemple 12 | Rhodocoat X EZ-D 401 | 221.06 |
| | Acétate de méthoxypropyle | 21 |
| | Xylène | 21 |
| | Acétate de butylglycol | 5 |

On réalise ensuite le mélange A + B sous agitation manuelle et la viscosité de la formulation est ajustée, par ajout d'eau, à une viscosité de 22 s mesurée par coupe DIN 4 à 23°C. On mesure alors la durée de vie en pot de la formulation.

La mesure de la brillance et du Haze au cours du temps est utilisée pour évaluer cette durée de vie en pot.

| ***Durée*** | ***initiale*** | ***1 h*** | ***2 h*** | ***3 h*** | ***4 h*** | ***5 h*** |
|---|---|---|---|---|---|---|
| | | | | | | |
| **BrillanceV20°** | | | | | | |
| Exemple 11 | 97 | 96 | 97 | 97 | 95 | 94 |
| Exemple 12 | 96 | 93 | 93 | 92 | 92 | 91 |
| | | | | | | |

| **Haze** | | | | | | |
|---|---|---|---|---|---|---|
| Exemple 11 | 24 | 28 | 32 | 43 | 57 | 61 |
| Exemple 12 | 37 | 41 | 43 | 55 | 71 | 75 |

Le niveau de brillance et de Haze sont excellents pour les deux formulations à l'état initial.

On note cependant pour l'exemple 11 à base du mélange selon l'invention, une baisse de brillance et une augmentation du Haze plus modérés ce qui indique une meilleure stabilité de la composition.

On mesure également les propriétés mécaniques du revêtement après application sur plaque de métal et séchage en conditions contrôlées (23°C, 50% d'humidité relative) pendant 7 jours.

### Essai de résistance au choc par chute d'une bille

Il s'agit dévaluer la résistance au choc d'un feuil de peinture ou vernis sur plaque d'acier en observant l'apparition de craquelures ou de décollements.

L'essai consiste à soumettre le revêtement au choc d'un percuteur de dimensions et de poids déterminés dont la hauteur de chute est réglable. On détermine ainsi la hauteur maximale à partir de laquelle le feuil de peinture n'est plus abîmé par le choc.

On dispose de deux appareils d'essai à chute de bille (Erichsen) l'un équipé pour les chocs AFNOR (poids de 1000 g) et l'autre pour les chocs ASTM (poids de 910,3 g).

Le résultat donné indique la hauteur maximale obtenue avant apparition de craquelures :

| **Résistance au choc** | Exemple 11 | Exemple 12 |
|---|---|---|
| ASTM | 30 | 18 |
| AFNOR | 20 | 15 |

Les revêtements à base du mélange selon l'invention présentent une meilleure flexibilité par rapport à l'exemple comparatif.

### Exemples 13 et 14 : Exemples d'application sur plastique

On réalise une partie A de composition suivante :

| | ***Quantité*** | ***Fonction*** | ***Fabriquant*** |
|---|---|---|---|
| Neorez R 1010 | 70,2 g | Résine PUD | Neoresins |
| Dehydran 1293 | 0,2 g | Antimousse | Cognis |
| BYK346 | 0,4 g | Agent de mouillage | BYK |
| Eau déminéralisée | 18,6 g | | |
| Aquachem 895-9905 ALB Lamp Black | 3,6 g | Pâte pigmentaire | Degussa |

On réalise ensuite le mélange A + B2 (selon l'invention) d'une part et A + B5 (comparatif) d'autre part, sous agitation manuelle dans les proportions suivantes :

| ***Exemple N°*** | ***Composition*** | ***Quantité de partie B (g) pour 100 g de partie A*** |
|---|---|---|
| Exemple 13 | B2 | 10 |
| Exemple 14 | B5 | 10 |

La résistance chimique par rapport à de nombreux agents agressifs est évaluée. On procède à l'exposition du feuil à des cotons imbibés de divers agents agressifs. Après un certain temps, on effectue une cotation visuelle du film en cotant de 0 à 5 ou 6 selon les agents agressifs (0 = film intact, 5ou 6 = film détruit)

| ***RÉSISTANCE CHIMIQUE*** | | ***Partie A seule*** | ***Exemple 13*** | ***Exemple 14*** |
|---|---|---|---|---|
| Résistance aux agents chimiques (0 à 5) | *Durant 1 h à 23°C* | | | |
| | Isopropanol | 2 | 2 | 2 |
| | Eau | 5 | 1 | 2 |
| | éthanol 50% | 5 | 2 | 1 |
| | acide acétique 10% | 4 | 1 | 1 |
| | acide sulfurique 10% | 2 | 2 | 2 |
| | Ammoniaque 10% | 1 | 1 | 2 |
| Résistance à la transpiration (0 à 5) | *Durant 24 h à 70°C* | | | |
| | Transpiration acide | 5 | 2 | 5 |
| | Transpiration alcaline | 4 | 2 | 2 |
| | Transpiration NaCl | 0 | 0 | 0 |
| | Transpiration neutre | 3 | 0 | 1 |
| Résistance crème solaire et insecticide (DEET) (0 à 6) | *Durant 1 h* | | | |
| | Sun lotion à 23°C | 6 | 2 | 2 |
| | DEET à 23°C | 6 | 2 | 1 |
| | Sun lotion à 74°C | 6 | 3 | 6 |
| | DEET à 74°C | 2 | 2 | 3 |

L'exemple 13 met en évidence une résistance aux agressions chimiques supérieures pour le revêtement comprenant le mélange selon l'invention.

## Revendications

1. Mélange à base de polyisocyanate, **caractérisé en ce qu'**il comprend :
- au moins un polyisocyanate cycloaliphatique ;
- au moins un solvant comprenant une fonction ester et une fonction éther ; et
- un additif hydrophile du type non réactif

2. Mélange selon la revendication 1, présentant une viscosité à 5°C inférieure à 10 000 mPa.s.

3. Mélange selon la revendication 1 ou la revendication 2, dans lequel le solvant présente un point d'éclair supérieur à 61°C.

4. Mélange selon l'une quelconque des revendications 1 à 3, dans lequel le solvant présente un point d'ébullition compris entre 50°C et 350°C, plus particulièrement compris entre 100°C et 300°C.

5. Mélange selon l'une quelconque des revendications 1 à 4, dans lequel le solvant est le 3-methoxy-n-butylacétate.

6. Mélange selon l'une quelconque des revendications 1 à 5, dans lequel la proportion de solvant dans le mélange est comprise entre 2% et 60%, plus particulièrement entre 5% et 50% et encore plus particulièrement entre 7% et 40% en masse de solvant par rapport à l'ensemble du mélange.

7. Mélange selon l'une quelconque des revendications1 à 6, dans lequel le polyisocyanate cycloaliphatique est un polyisocyanate isocyanurate obtenu à partir de diisocyanates cycloaliphatiques, de préférence l'IPDT, le NBDT, l'H₁₂MDT ou le 1,3-BDT (1,3-BIC trimère).

8. Mélange selon l'une quelconque des revendications 1 à 7, dans lequel l'additif hydrophile répond à la formule (1) ou à la formule (2) : 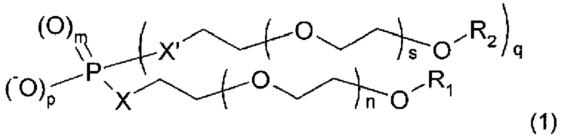 avec, lorsque q est égal à zéro, ceux de formule (2) : 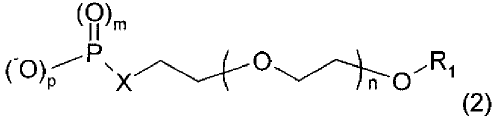 additifs de formule (1) ou de formule (2) où :
• p représente zéro ou un entier entre 1 et 2 (intervalles fermés c'est à dire comprenant les bornes) ;
• m représente zéro ou un entier entre 1 et 2 (intervalles fermés c'est à dire comprenant les bornes) ;
• la somme p + m + q est au plus égale à trois ;
• la somme 1+ p + 2m + q est égale à trois ou à cinq ;
• X et X', semblables ou différents, représentent un bras comportant au plus deux chaînons carbonés ;
• n et s, semblables ou différents, représentent un entier choisi entre 5 et 30 avantageusement entre 5 et 25, de préférence entre 9 et 20 (intervalles fermés c'est à dire comprenant les bornes) ; et
• R₁ et R₂, identiques ou différents, représentent un radical hydrocarboné, avantageusement choisi parmi les aryles et les alcoyles, éventuellement substitués, notamment par atome d'halogène, notamment fluor.

9. Mélange selon l'une quelconque des revendications 1 à 4, comprenant :
• un solvant à fonction éther et ester de type carboxylate d'alkoxy-alkyle, de préférence le 3-méthoxy-n-butylacétate ; et
• un poly-isocyanate cycloaliphatique, de préférence l'isocyanurate d'isophorone di-isocyanate (IPDT),
dans les proportions de 20% à 50% en poids de solvant par rapport à la masse totale de mélange, de préférence de 25% à 45%, plus préférentiellement 35% en poids de solvant par rapport à la masse totale de mélange.

10. Émulsion aqueuse comprenant un mélange selon l'une des revendications 1 à 9.

11. Émulsion aqueuse selon la revendication 10, **caractérisée en ce qu'**elle est obtenue par mise en émulsion dans l'eau du mélange selon l'une des revendications 1 à 10, ladite émulsion comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction thiol ou un composé contenant des fonctions précurseurs susceptibles de libérer des fonctions hydroxyles.

12. Émulsion aqueuse selon la revendication 10, **caractérisée en ce qu'**elle est obtenue par mise en émulsion dans l'eau du mélange selon l'une des revendications 1 à 10, ladite émulsion comprenant en outre au moins une dispersion aqueuse de polyuréthane.

13. Émulsion aqueuse selon la revendication 10, **caractérisée en ce qu'**elle est obtenue par mise en émulsion dans l'eau du mélange selon l'une des revendications 1 à 10, ladite émulsion comprenant en outre au moins une dispersion aqueuse de polyuréthane et au moins un composé porteur d'au moins une fonction à hydrogène mobile choisie parmi les fonctions hydroxyles primaires ou secondaires, phénols, amines primaires, et/ou secondaires, carboxyliques et fonction thiol ou un composé contenant des fonctions précurseurs susceptibles de libérer des fonctions hydroxyles.

14. Procédé de fabrication d'un revêtement sur un substrat, **caractérisé en ce qu'**on utilise une émulsion selon l'une quelconque des revendications 10 à 13.

## Patentansprüche

1. Gemisch auf der Basis von Polyisocyanat, **dadurch gekennzeichnet, dass** es Folgendes umfasst:
- mindestens ein cycloaliphatisches Polyisocyanat;
- mindestens ein Lösungsmittel, das eine Esterfunktion und eine Etherfunktion umfasst; und
- ein hydrophiles Additiv vom nicht-reaktiven Typ.

2. Gemisch nach Anspruch 1, das eine Viskosität bei 5°C von weniger als 10.000 mPa.s aufweist.

3. Gemisch nach Anspruch 1 oder Anspruch 2, wobei das Lösungsmittel einen Flammpunkt über 61 °C aufweist.

4. Gemisch nach einem der Ansprüche 1 bis 3, wobei das Lösungsmittel einen Siedepunkt zwischen 50 °C und 350 °C, insbesondere zwischen 100 °C und 300 °C aufweist.

5. Gemisch nach einem der Ansprüche 1 bis 4, wobei das Lösungsmittel 3-Methoxy-n-butylacetat ist.

6. Gemisch nach einem der Ansprüche 1 bis 5, wobei der Anteil des Lösungsmittels in dem Gemisch zwischen 2 % und 60 %, insbesondere zwischen 5 % und 50 % und noch besonderer zwischen 7 % und 40 Gew.-% Lösungsmittel bezogen auf das gesamte Gemisch liegt.

7. Gemisch nach einem der Ansprüche 1 bis 6, wobei das cycloaliphatische Polyisocyanat ein Isocyanurat-Polyisocyanat ist, das aus cycloaliphatischen Diisocyanaten erhalten wird, bevorzugt IPDT, NBDT, H₁₂MDT oder 1,3-BDT (trimeres 1,3-BIC).

8. Gemisch nach einem der Ansprüche 1 bis 7, wobei das hydrophile Additiv der Formel (1) oder der Formel (2) entspricht: 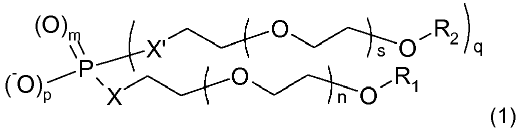 mit, wenn q gleich null ist, denen der Formel (2): 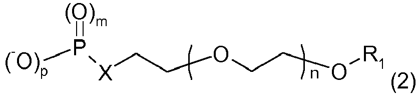 Zusatzstoffe der Formel (1) oder der Formel (2), wobei:
• p für null oder eine ganze Zahl zwischen 1 und 2 steht (geschlossene Intervalle, das heißt einschließlich der Grenzwerte);
• m für null oder eine ganze Zahl zwischen 1 und 2 steht (geschlossene Intervalle, das heißt einschließlich der Grenzwerte);
• die Summe p + m + q höchstens gleich drei ist;
• die Summe von 1 + p + 2m + q gleich drei oder fünf ist;
• X und X', die ähnlich oder verschieden sind, für einen Arm stehen, der höchstens zwei Kohlenstoffringe umfasst;
• n und s, die ähnlich oder verschieden sind, für eine ganze Zahl stehen, die zwischen 5 und 30, vorteilhafterweise zwischen 5 und 25, bevorzugt zwischen 9 und 20 gewählt ist (geschlossene Intervalle, das heißt einschließlich der Grenzwerte); und
• R₁ und R₂, die gleich oder verschieden sind, für ein Kohlenwasserstoffradikal stehen, das vorteilhafterweise unter den Arylen und den Alkylen gewählt ist, die gegebenenfalls substituiert sind, insbesondere durch ein Halogenatom, insbesondere Fluor.

9. Gemisch nach einem der Ansprüche 1 bis 4, umfassend:
• ein Lösungsmittel mit Ether- und Esterfunktion vom Alkoxyalkylcarboxylat-Typ, bevorzugt 3-Methoxy-n-butylacetat; und
• ein cycloaliphatisches Polyisocyanat, bevorzugt Isophorondiisocyanat-Isocyanurat (IPDT),
in den Anteilen von 20 bis 50 Gew.-% Lösungsmittel bezogen auf die Gesamtmasse des Gemisches, bevorzugt 25 bis 45 Gew.-%, noch bevorzugter 35 Gew.-% Lösungsmittel bezogen auf die Gesamtmasse des Gemisches.

10. Wässrige Emulsion, umfassend ein Gemisch nach einem der Ansprüche 1 bis 9.

11. Wässrige Emulsion nach Anspruch 10, **dadurch gekennzeichnet, dass** sie durch Emulgieren des Gemisches nach einem der Ansprüche 1 bis 10 in Wasser erhalten wird, wobei die Emulsion ferner mindestens eine Verbindung umfasst, die mindestens eine Funktion mit beweglichem Wasserstoff trägt, die unter den primären oder sekundären Hydroxylfunktionen, Phenolen, primären und/oder sekundären Aminen, Carboxylfunktionen und einer Thiolfunktion oder einer Verbindung, die Vorläuferfunktionen enthält, die geeignet sind, Hydroxylfunktionen freizusetzen, gewählt ist.

12. Wässrige Emulsion nach Anspruch 10, **dadurch gekennzeichnet, dass** sie durch Emulgieren der Gemisches nach einem der Ansprüche 1 bis 10 in Wasser erhalten wird, wobei die Emulsion ferner mindestens eine wässrige Polyurethandispersion umfasst.

13. Wässrige Emulsion nach Anspruch 10, **dadurch gekennzeichnet, dass** sie durch Emulgieren der Gemisches nach einem der Ansprüche 1 bis 10 in Wasser erhalten wird, wobei die Emulsion ferner mindestens eine wässrige Polyurethandispersion umfasst und mindestens eine Verbindung, die mindestens eine Funktion mit beweglichem Wasserstoff trägt, die unter den primären oder sekundären Hydroxylfunktionen, Phenolen, primären und/oder sekundären Aminen, Carboxylfunktionen und einer Thiolfunktion oder einer Verbindung, die Vorläuferfunktionen umfasst, die geeignet sind, Hydroxylfunktionen freizusetzen, gewählt ist.

14. Verfahren zur Herstellung eines Überzugs auf einem Substrat, **dadurch gekennzeichnet, dass** eine Emulsion nach einem der Ansprüche 10 bis 13 verwendet wird.

## Claims

1. Polyisocyanate mixture, **characterised in that** it comprises:
- at least one cycloaliphatic polyisocyanate;
- at least one solvent comprising an ester and an ether function; and
- a hydrophilic additive of the non reactive-type.

2. Mixture according to claim 1, having a viscosity at 5°C less than 10,000 mPa.s.

3. Mixture according to claim 1 or claim 2, wherein the solvent has a flash point above 61 °C.

4. Mixture according to any one of claims 1 to 3, wherein the solvent has a boiling point between 50°C and 350°C, more particularly between 100°C and 300°C.

5. Mixture according to any one of claims 1 to 4, wherein the solvent is 3-methoxy-n-butylacetate.

6. Mixture according to any one of claims 1 to 5, wherein the proportion of solvent in the mixture is between 2% and 60%, more particularly between 5% and 50% and even more particularly between 7% and 40% by weight of solvent relative to the entire mixture.

7. Mixture according to any one of claims 1 to 6, wherein the cycloaliphatic polyisocyanate is an isocyanurate polyisocyanate obtained from cycloaliphatic diisocyanates, preferably IPDT, NBDT, H₁₂MDT or 1,3-BDT (1,3-BIC trimer).

8. Mixture according to any one of claims 1 to 7, wherein the hydrophilic additive corresponds to formula (1) or to formula (2): 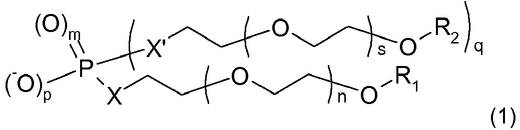 with, when q is equal to zero, those of formula (2): 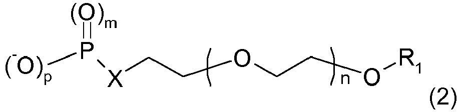 additives of formula (1) or formula (2) wherein:
• p represents zero or an integer between 1 and 2 (closed intervals, i.e. including the limits);
• m represents zero or an integer between 1 and 2 (closed intervals, i.e. including the limits);
• p + m + q is at most equal to three;
• 1+ p + 2m + q is equal to three or five;
• X and X', identical or different, represent an arm comprising at most two carbon chains;
• n and s, identical or different, represent an integer selected from between 5 and 30, advantageously between 5 and 25, preferably between 9 and 20 (closed intervals, i.e. including the limits); and
• R₁ and R₂, identical or different, represent a hydrocarbon radical, advantageously selected from among aryls and alkyls, optionally substituted in particular by a halogen atom, especially fluorine.

9. Mixture according to any one of claims 1 to 4, comprising:
• a solvent with ether function and ester of the alkoxy-alkyl carboxylate type, preferably 3-methoxy-n-butylacetate; and
• a cycloaliphatic polyisocyanate, preferably the isocyanurate of isophorone diisocyanate (IPDT),
in proportions of 20% to 50% by weight of solvent relative to the total mass of the mixture, preferably of 25% to 45%, more preferably 35% by weight of solvent relative to the total mass of the mixture.

10. Aqueous emulsion comprising a mixture according to any one of claims 1 to 9.

11. Aqueous emulsion according to claim 10, **characterised in that** it is obtained by emulsification in water of the mixture according to any one of claims 1 to 10, said emulsion further comprising at least one compound carrying at least one mobile hydrogen function selected from among primary or secondary hydroxyl functional groups, phenols, carboxylic primary and/or secondary amines and thiol function or a compound containing precursor functions capable of releasing hydroxyl functions.

12. Aqueous emulsion according to claim 10, **characterised in that** it is obtained by emulsification in water of the mixture according to any one of claims 1 to 10, said emulsion further comprising at least one aqueous dispersion of polyurethane.

13. Aqueous emulsion according to claim 10, **characterised in that** it is obtained by emulsification in water of the mixture according to any one of claims 1 to 10, said emulsion further comprising at least one aqueous dispersion of polyurethane and at least one compound carrying at least one mobile hydrogen function selected from among primary or secondary hydroxyl functions, phenols, carboxylic primary and/or secondary amines and thiol function or a compound containing precursor functions capable of releasing hydroxyl functions.

14. Method of manufacturing a coating on a substrate, **characterised in that** it uses an emulsion according to any one of claims 10 to 13.
